# EUROPEAN PATENT SPECIFICATION

(11) **EP 4 212 761 B1**
(45) Date of publication and mention of the grant of the patent: **07.10.2026**
(21) Application number: 22151497.9
(22) Date of filing: 14.01.2022
(51) Int. Cl.: F16J 15/02, F16J 15/06, F16J 15/10

(54) **A GASKET FOR A VEHICLE COMPONENT**
DICHTUNG FÜR EIN FAHRZEUGBAUTEIL
JOINT D'ÉTANCHÉITÉ POUR UN COMPOSANT DE VÉHICULE

(43) Date of publication of application: 19.07.2023
(73) Proprietor: ZF CV Systems Europe BV, 1170 Brüssel (BE)
(72) Inventor: GORA, Rafal, 54-129 Wroclaw (PL); KASZUBA, Damian, 50-504 Wroclaw (PL)
(74) Representative: Ohlendorf, Henrike

(56) References cited:
- EP-A1- 1 900 981
- EP-A1- 3 287 673
- WO-A1-2020/126455
- US-A- 5 947 483

## Description

The present invention relates to a gasket for a component of a vehicle, in particular for a utility vehicle, the gasket is adapted for sealing a space between a first member and a second member, wherein the first member faces the second member, the gasket is adapted to be fitted in a mounting groove formed on a facing surface of the first member, wherein the gasket comprises a base portion adapted to face a base surface of the mounting groove and a side portion adapted to face a lateral surface of the mounting groove, wherein the gasket comprises a longitudinal rib provided on the side portion for contacting the lateral surface of the mounting groove, wherein the longitudinal rib extends perpendicular to the base portion of the gasket. The invention also relates to a component of a vehicle, in particular of a utility vehicle, a vehicle, in particular a utility vehicle, and to a method of assembly of a component for a vehicle, in particular for a utility vehicle.

Such a gasket is known in the prior art. If the gasket is mounted into the mounting groove of the first member and the resulting subassembly of the gasket and the first member is oriented for further assembling upside down, i.e., the facing surface in which the mounting groove is formed is oriented downwards, the gasket tends to fall out of the mounting groove during the assembly process. This problem typically occurs and there is a risk of the gasket falling out of the groove in a case of a component which is assembled "overhead" or moved in a way which favors the gasket falling out of the mounting groove during the assembly process.

Furthermore, to provide sufficient groove filling in the area of a groove crossing is to be improved. Therein, a grove crossing is a section of the mounting groove at which at least three elongated groove sections merge into each other. A groove crossing that is not sufficiently filled by the gasket can lead to a potential problem with gasket movability, especially in an area at which the gasket is pressurized from both sides, i.e., from the facing surface of the first member and from a second facing surface of the second member that faces the facing surface of the first member. The movement of the gasket can lead to leakage due to wear of the gasket, i.e., its sealing surface.

According to the prior art, the solution of the problem of the gasket falling out of the mounting groove and of reducing the movability of the gasket within the groove is to provide the gasket with special elements designed to fixate the gasket within the groove. These elements are specifically designed areas of the gasket for fitting the gasket into the groove and locking the gasket within the groove similar to a press-fit connection. I.e., the fixation of the gasket within the mounting groove is achieved by a frictional force between these elements of the gasket and the mounting groove. These special elements are referred as "hooks" or "ribs". Hooks are usually distributed along a gasket main contour for fixing the gasket within the mounting groove and ribs are provided for a restriction of gasket movement. However, the presence of hooks makes the assembly process more difficult as the hooks need to be pressed into the groove and as the hooks can cause the gasket to tilt during assembly if the hooks are non-symmetrically distributed along the gasket main contour. Furthermore, it is difficult to predict a number of hooks and/or ribs needed which leads to a best-guess approach. This can result in a tool correction loop or even in the need to manufacture a new tool for a revised design of the gasket. Furthermore, an assembly force to press the gasket into the groove can be large and by that assembly process can be difficult.

DE 10 2018 200 177 A1 discloses a gasket. EP1900981A1 discloses a gasket which is placed in a groove formed in one of two members and which seals a gap between the two members. The gasket comprises a pair of seal lips which come into tight contact with the other one of the two members and which are provided in parallel to each other, and a plurality of connecting portions which are provided between the pair of seal lips, which are connected to each of the seal lips, and which hold a distance between the seal lips near a connected portion. WO2020126455A1 relates to a cover unit for a component to be covered, particularly for a motor or engine casing, the cover unit comprising a plurality of cover elements and several or all of the plurality of cover elements comprising at least one part each requiring precision, each cover element is arranged on at least one other cover element with play when mounted and the cover elements are sealed off from one another. US5947483A discloses a seal of an elastomeric material used to mount an intake manifold in a gas-tight manner on the cylinder head of an internal combustion engine. The seal is formed so as to blend together in one piece and can be located on the side of the intake manifold flange facing the cylinder head. EP3287673A1 discloses a gasket molded product according to a seal technique.

It is an object of the present invention to provide a gasket that provides a reliable sealing between a component of a vehicle, in particular of a utility vehicle, and that is effectively manufacturable and mountable.

The object is solved by the gasket for a component of a vehicle, in particular for a utility vehicle, according to independent claim 1 and by the subject-matter according to the independent claims. Dependent claims relate to preferred embodiments.

According to the invention, the gasket comprises at least one gasket crossing and at least three elongated gasket portions merging at the gasket crossing. Thus, the gasket is adapted to be mounted in a mounting groove that comprises at least one groove crossing. One end of each of the at least three elongated gasket portions is arranged at the gasket crossing, wherein the plurality of ends of the elongated gasket portions form the gasket crossing and meet at the gasket crossing. At the gasket crossing, the gasket is divided into the at least three elongated gasket portions.

According to the invention, the longitudinal rib is arranged at the gasket crossing. The arrangement of the longitudinal rib at the gasket crossing improves groove filling of the mounting groove in the area of the groove crossing and of the gasket crossing. Arranging the longitudinal rib at the gasket crossing leads to a well-defined arrangement of the longitudinal rib. The solution leads to a stable fixation of the gasket in the mounting groove, which positively impacts the assembly process of the component. For instance, as already mentioned above, when a person assembling the gasket to the component, and when the component is held above the head of the person in an upside down manner, the gasket does not fall off the component to which it is assembled to. By this way, the person assembling the gasket need not worry whether the gasket would fall off the assembly when other intermediate assembly steps are to be performed. The invention is particularly applicable in any application which use complex gasket routing, comprising at least one gasket crossing.

Preferably, the longitudinal rib comprises at least three contact surface sections. Each of the contact surface sections is adapted to contact the lateral surface of the mounting groove. This enables that, at the gasket crossing, the longitudinal rib and the mounting groove contact each other at three different, non-overlapping areas. This leads to an improved force distribution of contact forces between the gasket and the mounting groove to fixate the gasket within the mounting groove and to reduce the movability of the gasket. Optionally, the number of contact surfaces equals the number of elongated gasket portions merging at the gasket crossing.

Preferably, the longitudinal rib provides at least three protruding portions. Therein, each of the protruding portions optionally forms one of the contact surfaces. Each of the protruding portions is arranged opposite to one of the elongated gasket portions to reduce the gasket movability in the direction of the corresponding elongated gasket portion. Additionally or alternatively, each of the protruding portions is arranged between two of the at least three elongated gasket portions, to reduce the movability of the gasket lateral to the corresponding two elongated gasket portions. Preferably, in particular if the number of elongated gasket portions is odd, each of the protruding portions is arranged opposite to one of the elongated gasket portions and between two of the at least three elongated gasket portions, to reduce the overall movability of the gasket.

Preferably, each of the protruding portions comprises a shape that depends on the arrangement of two of the elongated gasket portions between which the protruding portion is arranged. I.e., a different arrangement of two pairs of two elongated gasket portions implies different shapes of the two protruding portions which are respectively arranged between the pair of the two elongated portions. The dependence on the shape of the protruding portion enables an improved reduction of movability, an improved sealing and an improved gap filling in the area of groove crossings. Specifically, the shape of the protruding portion can depend on an angle which is enclosed by two elongated gasket portions between which the protruding portion is arranges.

Preferably, one of the protruding portions has an asymmetric shape and/or a varying curvature. This can further improve the gap filling properties and facilitate mounting of the gasket into the mounting groove.

Preferably, two of the protruding portions comprises shapes that differ from each other. E.g., a protruding portion which is arranged between two elongated gasket portions that enclose an acute angle has a shape that is different from the shape of a protruding portion which is arranged between two elongated gasket portions that enclose an obtuse angle.

Preferably, the longitudinal rib comprises a barrel shape. The longitudinal rib optionally comprises a circular or elliptic cross-section and the contact surface sections are different, non-overlapping circumferentially distributed sections of the longitudinal rib. This embodiment enables an efficient manufacture of the longitudinal rib.

Preferably, the longitudinal rib comprises a retention protrusion provided in a direction parallel to the base portion of the gasket and/or circumferentially with respect to the longitudinal rib. For example, the longitudinal rib has a barrel shape and the retention protrusion forms an element for an improved gaskets fixture. Optionally, the shape of the longitudinal rib is barrel-shaped with the retention protrusion being a circumferentially arranged all-around-rib to make the fit of the gasket within the mounting groove more robust.

Preferably, the longitudinal rib comprises a cavity and/or a hole extending from the base portion of the gasket into and/or through the longitudinal rib. A hole and/or cavity in the rib enables a compensation of thermal expansion of the rib in case of temperature differences, e.g., due to running the component.

Preferably, the gasket comprises a plurality of gasket crossings and of longitudinal ribs, and one of the longitudinal ribs is arranged at each of the gasket crossings. Arranging the longitudinal ribs at the gasket crossings leads to a well-defined arrangement of the longitudinal ribs. This leads to a well-predictable mechanical fixation of gasket in the mounting groove. This embodiment enables that a reduced number of longitudinal ribs is provided to achieve a reliable fixation of the gasket and the mounting groove.

According to another aspect of the invention, a component for a vehicle, in particular for a utility vehicle, comprises a first member, a second member and a gasket according to the invention. Optionally, the gasket comprises any of the described features to achieve the technical effect associated therewith. For example, the component is or comprises a gearbox or a vehicle transmission actuator and/or a part assembled to a gearbox/vehicle transmission.

According to another aspect of the invention, a vehicle, in particular a utility vehicle, comprises a component according to the present invention. Optionally, a gasket of the component comprises any of the described features to achieve the technical effect associated therewith.

According to another aspect of the invention, a method of assembly of a component for a vehicle, in particular for a utility vehicle, comprises the steps of: providing a first member, a second member and a gasket according to the invention, fitting the gasket in the mounting groove formed on the facing surface of the first member, mounting the first member with the gasket to the second member. Optionally, the gasket comprises any of the described features to achieve the technical effect associated therewith.

Further advantages and technical features and their technical effects are disclosed in the figures and the description thereof.

The figures show preferred embodiments as follows:
- Fig. 1: a top view of a gasket according to the prior art;
- Fig. 2: a top view of a gasket according to an embodiment of the invention;
- Fig. 3: a top view of a gasket crossing of a gasket according to an embodiment of the invention;
- Fig. 4: a sectional view of a plurality of ribs of a gasket according to an embodiment of the invention;
- Fig. 5: a perspective view of a section of two gaskets according to an embodiment of the invention;
- Fig. 6: an exploded view of a component according to an embodiment of the invention;
- Fig. 7: a cross-sectional view of a component according to an embodiment of the invention;
- Fig. 8: a top view of a gasket according to another embodiment of the invention;
- Fig. 9: a vehicle according to an embodiment of the invention; and
- Fig. 10: a utility vehicle according to an embodiment of the invention.

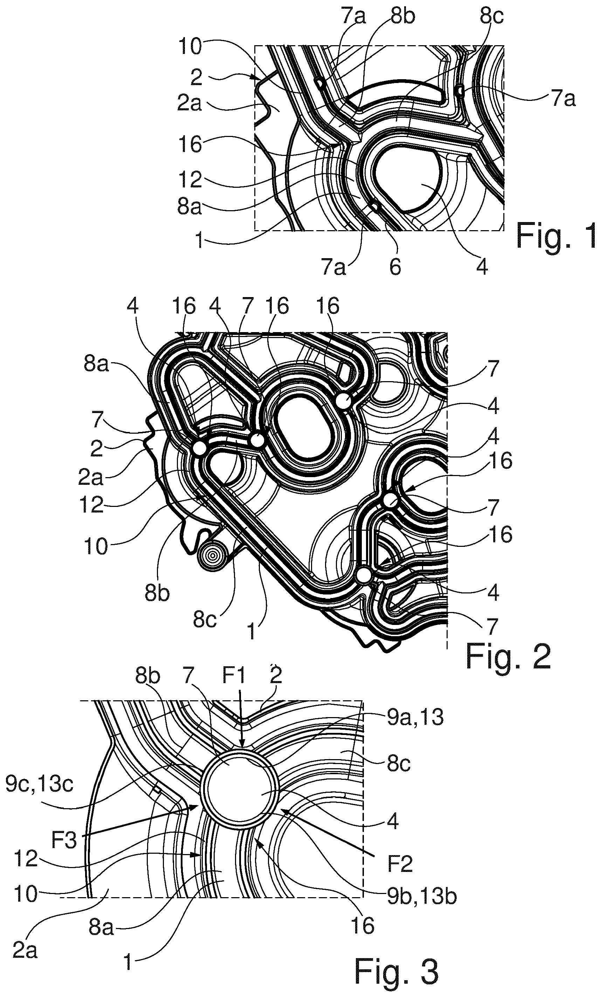

Figure 1 shows a top view of a gasket 1 according to the prior art.

The gasket 1 is adapted for sealing a space 17 between a first member 2 and a second member 3 (not shown in Figure 1), wherein the first member 2 faces the second member 3. The members 2,3 are members of a component 100 of a vehicle 110, in particular of a utility vehicle 120.

The gasket 1 is adapted to be fitted in a mounting groove 10 formed on a facing surface 2a of the first member 2, wherein the gasket 1 comprises a base portion 5 adapted to face a base surface 11 (not shown in Figure 1) of the mounting groove 10 and a side portion 6 adapted to face a lateral surface 12 of the mounting groove 10.

The gasket 1 comprises a plurality of longitudinal ribs 7a provided on the side portion 6 for contacting the lateral surface 12 of the mounting groove 10. The longitudinal rib 7a extends perpendicular to the base portion 5 of the gasket 1.

The longitudinal ribs 7a are arranged at elongated gasket portions 8a, 8b, 8c of the gasket 1, i.e., along the gasket route. However, this makes the assembly process difficult and can cause the gasket 1 to tilt during assembly if the longitudinal ribs 7a are non-symmetrically distributed along to the main contour of the gasket 1.

The gasket 1 comprises a gasket crossing 4 and the mounting groove 10 comprises a corresponding groove crossing 16 in which the gasket 1 is to be inserted with the gasket crossing 4. At the gasket crossing 4, no longitudinal rib is provided. This leads to an insufficient groove filling in the area of mounting groove 10 near the gasket crossing 10 and the groove crossing 16 and thus to movability of the gasket 1 and potentially to leakage due to wear of gasket sealing surface.

Figure 2 shows a top view of a gasket 1 according to an embodiment of the invention.

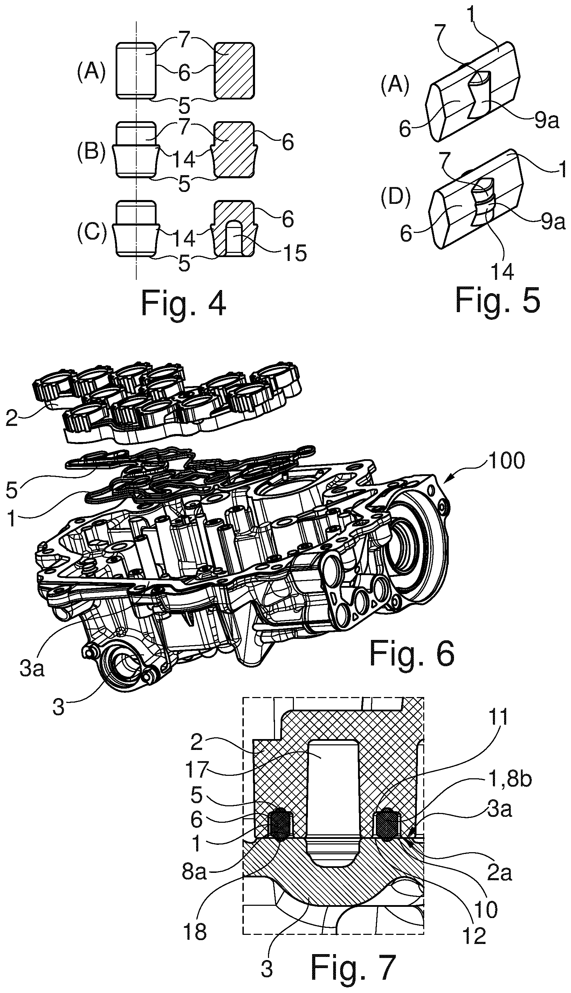

The gasket 1 is adapted to being used for a component 100 of a vehicle 110, in particular for a utility vehicle 120. Therein, the gasket 1 is adapted for sealing a space 17 between a first member 2 and a second member 3 (see Figure 7). Therein, the first member 2 faces the second member 3 as explained with reference to Figures 6 and 7. The members 2,3 are members of a component 100 of a vehicle 110, in particular of a utility vehicle 120.

In Figure 2, the gasket 1 is adapted to be fitted in a mounting groove 10 formed on a facing surface 2a of the first member 2. The gasket 1 comprises a base portion 5 (see Figures 6 and 7) adapted to face a base surface 11 of the mounting groove 10 and a side portion 6 adapted to face a lateral surface 12 of the mounting groove 10.

The mounting groove 10 comprises a plurality of groove crossings 16. Therein, a grove crossing 16 is a section of the mounting groove 10 at which at least three elongated groove sections merge into each other.

The gasket 1 comprises a plurality of gasket crossings 4. At each of the gasket crossings 4, three elongated gasket portions 8a, 8b, 8c merge. I.e., the gasket 1 comprises a main contour with a plurality of elongated gasket portions 8a, 8b, 8c, and at least three of the elongated gasket portions 8a, 8b, 8c merge, i.e., meet, at one of the gasket crossings 4. In other words, each of the elongated gasket portions 8a, 8b, 8c comprises one end that is arranged at one of the gasket crossings 4. In another embodiment (not shown), a different number being larger than three of elongated gasket portions 8a, 8b, 8c merge at a gasket crossing 4.

The gasket 1 comprises a plurality of longitudinal ribs 7 (see also Figures 4 and 5). Each of the longitudinal ribs 7 is provided on the side portion 6 for contacting the lateral surface 12 of the mounting groove 10. The longitudinal rib 7 extends perpendicular to the base portion 5 of the gasket 1, i.e., the longitudinal rib 7 extends into the drawing plane in the shown top view.

The longitudinal ribs 7 are fitted at the groove crossings 4 and comprise a specific shape as described with reference to Figures 4 and 5.

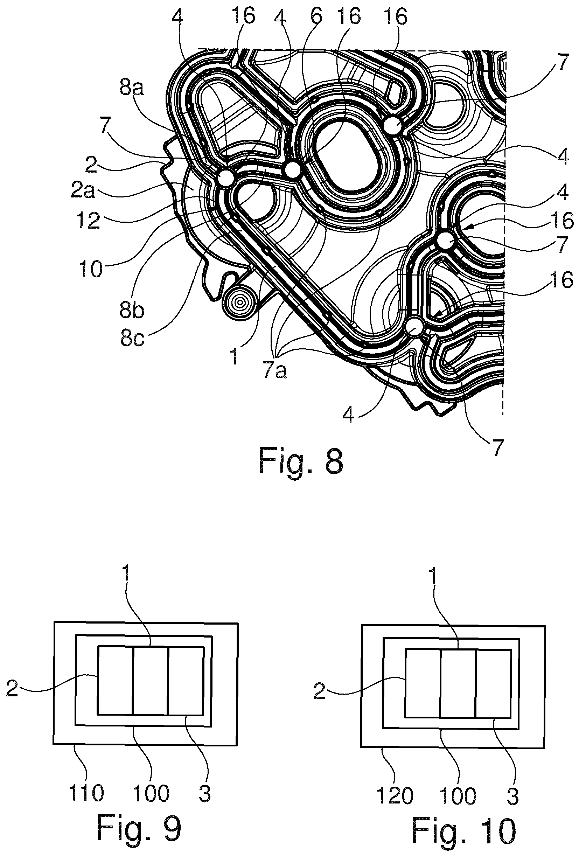

In the embodiment of Figure 2, each one of the longitudinal ribs 7 is arranged at one of the gasket crossings 4. In another embodiment (see Figure 8), one or more longitudinal ribs 7 are arranged at the elongated gasket portions 8a, 8b, 8c, i.e., for example, between two adjacent gasket crossings 4 and/or one of the longitudinal ribs 7 is arranged at each of the gasket crossings 4.

Figure 3 shows a top view of a gasket crossing 4 of a gasket 1 according to an embodiment of the invention. The gasket 1 is the gasket 1 as shown in and described with reference to Figure 2. Figure 3 illustrates one of the gasket crossing 4 in more detail. Figure 3 also illustrates the force distribution of contact forces F1, F2, F3.

The longitudinal rib 7 being arranged at the gasket crossing 4 comprises at least three contact surface sections 9a, 9b, 9c. The longitudinal rib 7 contacts with its side portion 6 the lateral surface 12 of the mounting groove 10 at each of the three contact surface sections 9a, 9b, 9c. Each of the contacts between the side portion 6 of the longitudinal rib 7 and the lateral surface 12 of the mounting groove 10 implies a contact force F1, F2, F3 as indicated by straight arrows with solid line. The contact forces F1, F2, F3 are forces exerted between the longitudinal rib 7 and the mounting groove 10 at the contact surface sections 9a, 9b, 9c.

The longitudinal rib 7 provides three protruding portions 13a, 13b, 13c. Each of the protruding portions 13a, 13b, 13c forms one of the contact surface sections 9a, 9b, 9c.

Each of the protruding portions 13a, 13b, 13c is arranged opposite to one of the elongated gasket portions 8a, 8b, 8c. Each of the protruding portions 13a, 13b, 13c is arranged between two of the at least three elongated gasket portions 8a, 8b, 8c. This leads to an improved force distribution of the contact forces F1, F2, F3.

Each of the protruding portions 13a, 13b, 13c comprises a shape that depends on the arrangement of two of the elongated gasket portions 8a, 8b, 8c between which the protruding portion 13a, 13b, 13c is arranged. One of the protruding portions 13a, 13b, 13c has an asymmetric shape and/or a varying curvature (not shown). Two of the protruding portions 13a, 13b, 13c comprises shapes that differ from each other. For example, a protruding portion 13a, 13b, 13c which is arranged between the two elongated gasket portions 8a, 8b, 8c that enclose an acute angle can be formed as a cylinder segment with a larger diameter compared to a protruding portion 13a, 13b, 13c which is arranged between the two elongated gasket portions 8a, 8b, 8c that enclose an obtuse angle.

Figure 4 shows a sectional view of a plurality of ribs 7 of a gasket 1 according to an embodiment of the invention. The gasket 1 is the gasket 1 as described with reference to Figures 2 and 3.

In Figure 4 (A), the longitudinal rib 7 comprises a barrel shape, i.e., the longitudinal rib 7 has a cylindrical shape and a circular or elliptic cross-section. Therein, the cylinder axis is illustrated by a dash-dotted line. The longitudinal rib 7 comprises a side portion 6 and a base portion 5 which form the side portion 5 and the base portion 5 of the gasket 1, respectively. The base portion 5 is flat to form a contact surface with the base surface 11 of the mounting groove 10.

In Figure 4 (B), the longitudinal rib 7 comprises a barrel-shape as described with reference to Figure 4 (A) and a retention protrusion 14 provided in a direction parallel to the base portion 5 of the gasket 1 and circumferentially with respect to the longitudinal rib 7. The retention protrusion 14 is asymmetric, i.e., the retention protrusion 14 has an increasing diameter from the base portion 5 towards an opposite end of the longitudinal rib 7, wherein the retention protrusion 14 terminates before the opposite end of the longitudinal rib 7 is reached, e.g., in the middle of the longitudinal rib 7. Between the middle of the longitudinal rib 7 and the opposite end, the diameter of the longitudinal rib 7 is constant.

In Figure 4 (C), the longitudinal rib 7 comprises a barrel-shape as described with reference to Figure 4 (A), a retention protrusion 14 as described with reference to Figure 4 (B) and a cavity and/or a hole 15 extending from the base portion 5 of the gasket 1 into the longitudinal rib 7. Thus, the hole 15 is a blind hole. In another embodiment (not shown), the hole 15 is a through hole.

Figure 5 shows a perspective view of a section of two gaskets 1 according to an embodiment of the invention. Each of the gaskets 1 is the gasket 1 as described with reference to Figures 2 and 3. For simplicity, each of the embodiments of Figure 5 shows a longitudinal rib 7 arranged and an elongated portion of the gasket 1. However, the description of the embodiments as shown in Figure 5 are also applicable to a longitudinal rib 7 arranged at a gasket crossing 4. The embodiments as shown in Figures 5 (A) and (D) are described with reference to the embodiments of Figure 4.

The gasket 1 of Figure 5 (A) comprises the elongated rib 7. As explained with reference to Figure 4 (A). The longitudinal rib 7 forms a contact surface section 9a of the gasket 1. The side portion 6 of the longitudinal rib 7 has a prismatic cross-section.

The gasket 1 of Figure 5 (D), comprises a longitudinal rib 7 with a barrel-shape as described with reference to Figure 4 (A) and a retention protrusion 14 provided in a direction parallel to the base portion 5 of the gasket 1 and circumferentially with respect to the longitudinal rib 7. The retention protrusion 14 is symmetric. The retention protrusion 14 has a constant diameter which is larger than the diameter of the barrel-shaped longitudinal rib 7.

Figure 6 shows an exploded view of a component 100 according to an embodiment of the invention.

The component 100 is adapted for being used in a vehicle 110, in particular for in a utility vehicle 120 (see Figures 9 and 10). The component 100 is a gearbox for a vehicle 110, in particular for a utility vehicle 120.

The component 100 comprises a first member 2, a second member 3 and a gasket 1. The gasket 1 is, e.g., the gasket 1 as described with reference to Figures 2 and 3 or with reference to Figure 8, below.

In Figure 6, the first member 2 comprises a mounting groove 10 formed on a facing surface 2a of the first member 2 (not shown in Figure 6; described with reference to Figures 2 and 3). The shape of the mounting groove 10 and the shape of the gasket 1 are adapted to match each other. I.e., the shape of the mounting groove 10 and the shape of the gasket 1 correspond to each other so that the gasket 1 is mountable into the mounting groove 10 to be retained within the mounting groove 10. The mounting groove 10 comprises a base surface 11 (not shown in Figure 6) and the gasket 1 comprises a base portion 5. In the mounted state, the base portion 5 of the gasket 1 is arranged to contact the base surface 11 of the mounting groove 10.

The second member 3 comprises a second facing surface 3a. The facing surface 2a of the first member 2 and the second facing surface 3a of the second member 3 are shaped so that an areal contact between the facing surface 2a of the first member 2 and the second facing surface 3a of the second member 3 is achieved in the mounted state. The facing surface 2a of the first member 2 faces the second facing surface 3a of the second member 3. The gasket 1 seals the contact between the facing surface 2a of the first member 2 and the second facing surface 3a of the second member 3 as explained with reference to Figure 7.

The first member 2 is a plastic plate. The second member 3 is made of and/or comprises metal.

Figure 7 shows a cross-sectional view of a component 100 according to an embodiment of the invention. The component 100 of Figure 7 is the component 100 of Figure 6 in the mounted state, i.e., the first member 2, the second member 3 and the gasket 1 are assembled for sealing a space 17 between the first member 2 and the second member 3.

The cross-sectional view illustrates a section through the component, wherein two elongated gasket portions 8a, 8b of the gasket 1 are illustrated.

The gasket 1 is arranged within the mounting groove 10. In the mounted state, the base portion 5 of the gasket 1 contacts the base surface 11 of the mounting groove 10. The gasket 1 comprises a contact portion 18 being arranged opposite to the base portion 5. The contact portion 18 of the gasket 1 contacts the second facing surface 3a. As indicated in the Figure, the gasket 1 is pressurized to be elastically deformed to sealingly contact the first member 2 and the second member 3.

Figure 8 shows a top view of a gasket 1 according to another embodiment of the invention.

The gasket 1 of Figure 8 will be described with reference to the gasket 1 as shown in Figures 2 and 3. Therein, the differences between the gasket 1 of Figure 8 to the gasket of Figures 2 and 3 will be described.

The gasket 1 of Figure 8 comprises a plurality of ribs 7a being arranged on the elongated gasket portions 8a, 8b, 8c. The ribs 7a arranged on the elongated gasket portions 8a, 8b, 8c are additional to the ribs 7 at the gasket crossings 4.

Figure 9 shows a vehicle 110 according to an embodiment of the invention. The vehicle 110 comprises a component 100, e.g., the component 100 as described with reference to Figures 6 and 7 or with reference to Figure 8. The component 100 comprises a first member 2 and a second member 3. The first member 2 and the second member 3 are adapted and arranged to face each other. The first member 2 comprises a mounting groove 10 (not shown in Figure 9) in which a gasket 1 is arranged. The gasket 1 is adapted to seal a space 17 between the first member 2 and the second member 3. The gasket 1 is, e.g., the gasket 1 as described with reference to Figures 2 and 3 or with reference to Figure 8.

Figure 10 shows a utility vehicle 120 according to an embodiment of the invention. The utility vehicle 120 comprises a component 100, e.g., the component 100 as described with reference to Figures 6, 7 and 9 or with reference to Figure 8. Thus, the component 100 comprises the first member 2, the second member 3 and the gasket 1. The gasket 1 is, e.g., the gasket 1 as described with reference to Figures 2 and 3 or with reference to Figure 8.

### List of reference signs (part of the description)

- 1: gasket
- 2: first member
- 3: second member
- 2a: facing surface; 3a second facing surface
- 4: gasket crossing
- 5: base portion
- 6: side portion
- 7: rib
- 7a: rib on an elongated gasket portion
- 8a, 8b, 8c: elongated gasket portion
- 9a, 9b, 9c: contact surface section
- 10: mounting groove
- 11: base surface
- 12: lateral surface
- 13a, 13b, 13c: protruding portion
- 14: retention protrusion
- 15: hole
- 16: groove crossing
- 17: space
- 18: contact portion
- 100: component
- 110: vehicle
- 120: utility vehicle
- F1, F2, F3: contact force

## Claims

1. Gasket (1) for a component (100) of a vehicle (110), in particular for a utility vehicle (120), the gasket (1) is adapted for sealing a space (17) between a first member (2) and a second member (3), wherein the first member (2) faces the second member (3), wherein
- the gasket (1) is adapted to be fitted in a mounting groove (10) formed on a facing surface (2a) of the first member (2), wherein
- the gasket (1) comprises a base portion (5) adapted to face a base surface (11) of the mounting groove (10) and a side portion (6) adapted to face a lateral surface (12) of the mounting groove (10), wherein
- the gasket (1) comprises a longitudinal rib (7) provided on the side portion (6) for contacting the lateral surface (12) of the mounting groove (10), wherein the longitudinal rib (7) extends perpendicular to the base portion (5) of the gasket (1), **characterized in that**
- the gasket (1) comprises at least one gasket crossing (4) and at least three elongated gasket portions (8a, 8b, 8c) merging at the gasket crossing (4), and
- the longitudinal rib (7) is arranged at the gasket crossing (4), wherein one end of each of the at least three elongated gasket portions (8a, 8b, 8c) is arranged at the gasket crossing (4), and wherein the plurality of ends of the elongated gasket portions (8a, 8b, 8c) form the gasket crossing (4) and meet at the gasket crossing (4).

2. The gasket (1) as claimed in claim 1, wherein
- the longitudinal rib (7) comprises at least three contact surface sections (9a, 9b, 9c).

3. The gasket (1) as claimed in any one of the preceding claims, wherein
- the longitudinal rib (7) provides at least three protruding portions (13a, 13b, 13c), wherein each of the protruding portions (13a, 13b, 13c) is arranged opposite to one of the elongated gasket portions (8a, 8b, 8c) and/or between two of the at least three elongated gasket portions (8a, 8b, 8c).

4. The gasket (1) as claimed in claim 3, wherein
- each of the protruding portions (13a, 13b, 13c) comprises a shape that depends on the arrangement of two of the elongated gasket portions (8a, 8b, 8c) between which the protruding portion (13a, 13b, 13c) is arranged.

5. The gasket (1) as claimed in claims 3 or 4, wherein
- one of the protruding portions (13a, 13b, 13c) has an asymmetric shape and/or a varying curvature.

6. The gasket (1) as claimed in any one of claims 3 to 5, wherein
- two of the protruding portions (13a, 13b, 13c) comprises shapes that differ from each other.

7. The gasket (1) as claimed in any one of the preceding claims, wherein
- the longitudinal rib (7) comprises a barrel shape.

8. The gasket (1) as claimed in any one of the preceding claims, wherein
- the longitudinal rib (7) comprises a retention protrusion (14) provided in a direction parallel to the base portion (5) of the gasket (1) and/or circumferentially with respect to the longitudinal rib (7).

9. The gasket (1) as claimed in any one of the preceding claims, wherein
- the longitudinal rib (7) comprises a cavity and/or a hole (15) extending from the base portion (5) of the gasket (1) into and/or through the longitudinal rib (7).

10. The gasket (1) as claimed in any one of the preceding claims, wherein
- the gasket (1) comprises a plurality of gasket crossings (4) and of longitudinal ribs (7), and one of the longitudinal ribs (7) is arranged at each of the gasket crossings (4).

11. Component (100) for a vehicle (110), in particular for a utility vehicle (120), the component (100) comprises a first member (2), a second member (3) and a gasket (1) as claimed in any of the preceding claims.

12. Vehicle (110), in particular a utility vehicle (120), comprising a component (100) as claimed in claim 11.

13. Method of assembly of a component (100) for a vehicle (110), in particular for a utility vehicle (120), the method comprises the steps of:
- providing a first member (2), a second member (3) and a gasket (1) as claimed in any of the claims 1 to 10,
- fitting the gasket (1) in the mounting groove (10) formed on the facing surface (2a) of the first member (2),
- mounting the first member (2) with the gasket (1) to the second member (3).

## Patentansprüche

1. Dichtung (1) für ein Bauteil (100) eines Fahrzeugs (110), insbesondere für ein Nutzfahrzeug (120), wobei die Dichtung (1) zum Abdichten eines Raums (17) zwischen einem ersten Element (2) und einem zweiten Element (3) angepasst ist, wobei das erste Element (2) dem zweiten Element (3) zugewandt ist, wobei
- die Dichtung (1) angepasst ist, um in eine Montagenut (10) eingepasst zu werden, die an einer zugewandten Oberfläche (2a) des ersten Elements (2) ausgebildet ist, wobei
- die Dichtung (1) einen Basisabschnitt (5), der angepasst ist, um einer Basisoberfläche (11) der Montagenut (10) zugewandt zu sein, und einen Seitenabschnitt (6), der angepasst ist, um einer Seitenoberfläche (12) der Montagenut (10) zugewandt zu sein, umfasst, wobei
- die Dichtung (1) eine Längsrippe (7), die an dem Seitenabschnitt (6) bereitgestellt ist, zum Kontaktieren der lateralen Oberfläche (12) der Montagenut (10), umfasst, wobei sich die Längsrippe (7) senkrecht zu dem Basisabschnitt (5) der Dichtung (1) erstreckt, **dadurch gekennzeichnet, dass**
- die Dichtung (1) mindestens einen Dichtungsübergang (4) und mindestens drei längliche Dichtungsabschnitte (8a, 8b, 8c), die an dem Dichtungsübergang (4) zusammenlaufen, umfasst, und
- die Längsrippe (7) an dem Dichtungsübergang (4) angeordnet ist, wobei ein Ende jedes der mindestens drei länglichen Dichtungsabschnitte (8a, 8b, 8c) an dem Dichtungsübergang (4) angeordnet ist, und wobei die Vielzahl von Enden der länglichen Dichtungsabschnitte (8a, 8b, 8c) den Dichtungsübergang (4) ausbilden und sich an dem Dichtungsübergang (4) treffen.

2. Dichtung (1) nach Anspruch 1, wobei
- die Längsrippe (7) mindestens drei Kontaktoberflächenbereiche (9a, 9b, 9c) umfasst.

3. Dichtung (1) nach einem der vorstehenden Ansprüche, wobei
- die Längsrippe (7) mindestens drei vorstehende Abschnitte (13a, 13b, 13c) bereitstellt, wobei jeder der vorstehenden Abschnitte (13a, 13b, 13c) gegenüber einem der länglichen Dichtungsabschnitte (8a, 8b, 8c) und/oder zwischen zwei der mindestens drei länglichen Dichtungsabschnitte (8a, 8b, 8c) angeordnet ist.

4. Dichtung (1) nach Anspruch 3, wobei
- jeder der vorstehenden Abschnitte (13a, 13b, 13c) eine Form, die von der Anordnung von zwei der länglichen Dichtungsabschnitte (8a, 8b, 8c) abhängt, zwischen denen der vorstehende Abschnitt (13a, 13b, 13c) angeordnet ist, umfasst.

5. Dichtung (1) nach Anspruch 3 oder 4, wobei
- einer der vorstehenden Abschnitte (13a, 13b, 13c) eine asymmetrische Form und/oder eine variierende Krümmung aufweist.

6. Dichtung (1) nach einem der Ansprüche 3 bis 5, wobei
- zwei der vorstehenden Abschnitte (13a, 13b, 13c) Formen, die sich voneinander unterscheiden, umfasst.

7. Dichtung (1) nach einem der vorstehenden Ansprüche, wobei
- die Längsrippe (7) eine Tonnenform umfasst.

8. Dichtung (1) nach einem der vorstehenden Ansprüche, wobei
- die Längsrippe (7) einen Haltevorsprung (14), der in einer Richtung parallel zu dem Basisabschnitt (5) der Dichtung (1) und/oder umlaufend in Bezug auf die Längsrippe (7) bereitgestellt ist, umfasst.

9. Dichtung (1) nach einem der vorstehenden Ansprüche, wobei
- die Längsrippe (7) einen Hohlraum und/oder ein Loch (15), der/das sich von dem Basisabschnitt (5) der Dichtung (1) in und/oder durch die Längsrippe (7) erstreckt, umfasst.

10. Dichtung (1) nach einem der vorstehenden Ansprüche, wobei
- die Dichtung (1) eine Vielzahl von Dichtungsübergängen (4) und von Längsrippen (7) umfasst, und eine der Längsrippen (7) an jedem der Dichtungsübergänge (4) angeordnet ist.

11. Bauteil (100) für ein Fahrzeug (110), insbesondere für ein Nutzfahrzeug (120), wobei das Bauteil (100) ein erstes Element (2), ein zweites Element (3) und eine Dichtung (1) nach einem der vorhergehenden Ansprüche umfasst.

12. Fahrzeug (110), insbesondere ein Nutzfahrzeug (120), umfassend ein Bauteil (100) nach Anspruch 11.

13. Verfahren zum Zusammenbauen eines Bauteils (100) für ein Fahrzeug (110), insbesondere für ein Nutzfahrzeug (120), wobei das Verfahren die Schritte umfasst:
- Bereitstellen eines ersten Elements (2), eines zweiten Elements (3) und einer Dichtung (1) nach einem der Ansprüche 1 bis 10,
- Einpassen der Dichtung (1) in die Montagenut (10), die an der zugewandten Oberfläche (2a) des ersten Elements (2) ausgebildet ist,
- Montieren des ersten Elements (2) mit der Dichtung (1) an dem zweiten Element (3).

## Revendications

1. Joint (1) pour un composant (100) d'un véhicule (110), en particulier pour un véhicule utilitaire (120), le joint (1) est adapté pour étanchéifier un espace (17) entre un premier élément (2) et un second élément (3), dans lequel le premier élément (2) fait face au second élément (3), dans lequel
- le joint (1) est adapté pour être inséré dans une rainure de montage (10) formée sur une surface de face (2a) du premier élément (2), dans lequel
- le joint (1) comprend une partie de base (5) adaptée pour faire face à une surface de base (11) de la rainure de montage (10) et une partie de côté (6) adaptée pour faire face à une surface latérale (12) de la rainure de montage (10), dans lequel
- le joint (1) comprend une nervure longitudinale (7) fournie sur la partie de côté (6) pour entrer en contact avec la surface latérale (12) de la rainure de montage (10), dans lequel la nervure longitudinale (7) s'étend perpendiculairement à la partie de base (5) du joint (1), **caractérisé en ce que**
- le joint (1) comprend au moins un croisement de joint (4) et au moins trois parties de joint allongées (8a, 8b, 8c) se rejoignant au niveau du croisement de joint (4), et
- la nervure longitudinale (7) est agencée au niveau du croisement de joint (4), dans lequel une extrémité de chacune des au moins trois parties de joint allongées (8a, 8b, 8c) est agencée au niveau du croisement de joint (4), et dans lequel la pluralité d'extrémités des parties de joint allongées (8a, 8b, 8c) forment le croisement de joint (4) et se rencontrent au niveau du croisement de joint (4).

2. Joint (1) selon la revendication 1, dans lequel
- la nervure longitudinale (7) comprend au moins trois sections de surface de contact (9a, 9b, 9c).

3. Joint (1) selon l'une quelconque des revendications précédentes, dans lequel
- la nervure longitudinale (7) fournit au moins trois parties saillantes (13a, 13b, 13c), dans lequel chacune des parties saillantes (13a, 13b, 13c) est agencée à l'opposé de l'une des parties de joint allongées (8a, 8b, 8c) et/ou entre deux des au moins trois parties de joint allongées (8a, 8b, 8c).

4. Joint (1) selon la revendication 3, dans lequel
- chacune des parties saillantes (13a, 13b, 13c) comprend un profil qui dépend de l'agencement de deux des parties de joint allongées (8a, 8b, 8c) entre lesquelles la partie saillante (13a, 13b, 13c) est agencée.

5. Joint (1) selon les revendications 3 ou 4, dans lequel
- l'une des parties saillantes (13a, 13b, 13c) a un profil asymétrique et/ou une courbure variable.

6. Joint (1) selon l'une quelconque des revendications 3 à 5, dans lequel
- deux des parties saillantes (13a, 13b, 13c) comprennent des profils qui diffèrent l'un de l'autre.

7. Joint (1) selon l'une quelconque des revendications précédentes, dans lequel
- la nervure longitudinale (7) comprend un profil en tonneau.

8. Joint (1) selon l'une quelconque des revendications précédentes, dans lequel
- la nervure longitudinale (7) comprend une saillie de retenue (14) fournie dans une direction parallèle à la partie de base (5) du joint (1) et/ou circonférentiellement par rapport à la nervure longitudinale (7).

9. Joint (1) selon l'une quelconque des revendications précédentes, dans lequel
- la nervure longitudinale (7) comprend une cavité et/ou un trou (15) s'étendant à partir de la partie de base (5) du joint (1) jusque dans et/ou à travers la nervure longitudinale (7).

10. Joint (1) selon l'une quelconque des revendications précédentes, dans lequel
- le joint (1) comprend une pluralité de croisements de joint (4) et de nervures longitudinales (7), et l'une des nervures longitudinales (7) est agencée au niveau de chacun des croisements de joint (4).

11. Composant (100) pour un véhicule (110), en particulier pour un véhicule utilitaire (120), le composant (100) comprend un premier élément (2), un second élément (3) et un joint (1) selon l'une quelconque des revendications précédentes.

12. Véhicule (110), en particulier véhicule utilitaire (120), comprenant un composant (100) selon la revendication 11.

13. Procédé d'assemblage d'un composant (100) pour un véhicule (110), en particulier pour un véhicule utilitaire (120), le procédé comprend les étapes consistant à :
- fournir un premier élément (2), un second élément (3) et un joint (1) selon l'une quelconque des revendications 1 à 10,
- insérer le joint (1) dans la rainure de montage (10) formée sur la surface de face (2a) du premier élément (2),
- monter le premier élément (2) avec le joint (1) sur le second élément (3).
